# EUROPEAN PATENT APPLICATION

(11) **EP 2 974 837 A1**
(43) Date of publication of application: **20.01.2016**
(21) Application number: 15177360.3
(22) Date of filing: 17.07.2015
(51) Int. Cl.: B26D 7/26, B26F 3/00, B26D 3/08

(54) **SELF-ALIGNING CUTTER POST**

(30) Priority: 18.07.2014 US 201462026290 P
(71) Applicant: The Fletcher-Terry Company LLC, East Berlin, Connecticut 06023 (US)
(72) Inventor: Paharik, Benjamin W., Hopkinton, Massachusetts 01748 (US); MacQueen, Jr., Raymond J., Barkhamsted, Connecticut 06063 (US)
(74) Representative: Klunker . Schmitt-Nilson . Hirsch

(57) **Abstract**

An apparatus for providing a self-aligning cutter configured to score or cut a material is provided. The apparatus includes a chuck, a first magnet, and an outer housing. The first magnet is coupled with the chuck. The outer housing includes a second magnet. The outer housing is configured to couple with the chuck in a manner that at least a portion of the chuck and the outer housing are rotatable relative to one another. The first magnet and the second magnet are positioned relative to one another such that magnetic force there between biases the outer housing and the portion of the chuck to rest in a normal position.

## Description

The present disclosure relates to apparatus for scoring or cutting sheet materials in general, and to devices operable to hold and/or align a cutting device within such an apparatus in particular.

Sheet materials may be "cut" using a device with a cutting blade or a scoring wheel. It is known that such a blade or scoring wheel may be mounted within a holder, sometimes referred to as a "chuck". The chuck provides a structure to support the blade or wheel, and can facilitate replacement of the blade or wheel.

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

According to a first aspect of the present disclosure, an apparatus for providing a self-aligning cutter configured to score a material is provided. The apparatus includes a chuck, a magnet stem housing, and an outer housing. The chuck is configured to receive a cartridge. The magnet stem housing configured to couple to the chuck and a first magnet. The outer housing is configured to couple to the chuck, the magnet stem housing, and a second magnet. An orientation of the cutter is controlled based on a magnetic force between the first magnet and the second magnet.

In a further embodiment of the foregoing aspect, the magnet stem housing is configured to couple to the chuck via a post associated with the chuck.

In a further embodiment of any of the foregoing embodiments or aspects of the present disclosure, the magnet stem housing is configured to couple to the chuck in conjunction with at least one bearing, a washer, and a nut.

In a further embodiment of any of the foregoing embodiments or aspects of the present disclosure, the cartridge is coupled to a wheel configured to contact the material.

In a further embodiment of any of the foregoing embodiments or aspects of the present disclosure, the wheel is configured to score the material.

In a further embodiment of any of the foregoing embodiments or aspects of the present disclosure, the cartridge is coupled to a wheel configured to cut the material.

In a further embodiment of any of the foregoing embodiments or aspects of the present disclosure, the cartridge is coupled to a blade configured to contact the material.

In a further embodiment of any of the foregoing embodiments or aspects of the present disclosure, the chuck comprises a fastening mechanism configured to secure the cartridge within the chuck.

In a further embodiment of any of the foregoing embodiments or aspects of the present disclosure, the magnet stem housing is configured to couple to a screw to control the magnetic force.

In a further embodiment of any of the foregoing embodiments or aspects of the present disclosure, the outer housing comprises a shank configured to couple to a machine that is used to drive the cutter.

According to another aspect of the present disclosure, an apparatus for providing a self-aligning cutter configured to score a material is provided that includes a chuck and an outer housing. The chuck is configured to mount a cutter wheel (e.g., held within a cartridge), and the chuck includes a first magnet. The outer housing includes a second magnet, and is configured to couple with the chuck in a manner that at least a portion of the chuck and the outer housing are rotatable relative to one another. The first magnet and the second magnet are positioned relative to one another such that magnetic force there between biases the outer housing and the portion of the chuck to rest in a normal position.

The foregoing aspects, features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

The present disclosure is illustrated by way of example and not limited in the accompanying figures in which like reference numerals indicate similar elements.
FIG. 1 illustrates an exploded view of an exemplary cutter.
FIGS. 2A-2B illustrate perspective views of an exemplary magnet stem housing associated with the cutter of FIG. 1.
FIG. 3 illustrates details of the cutter of FIG. 1 in an assembled format.
FIGS. 4A-4B illustrate perspective views of the cutter of FIG. 1 in an assembled format.

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may potentially incorporate one or more intervening entities.

In accordance with various aspects of the disclosure, apparatuses, systems and methods are described for the construction, assembly, manufacture, and use of a self-aligning cutter post. In some embodiments, a cutter may be used to cut or score material. The material may include glass that may be used in one or more applications or environments, such as glass included on a mobile device (e.g., a smartphone). The cutter may be biased or positioned in terms of its orientation, such as an orientation of the cutter or cutter post relative to glass that is to be scored. For example, the orientation of the cutter or cutter post may be ensured when the cutter initially contacts the glass just prior to, or at the outset of, performing the scoring.

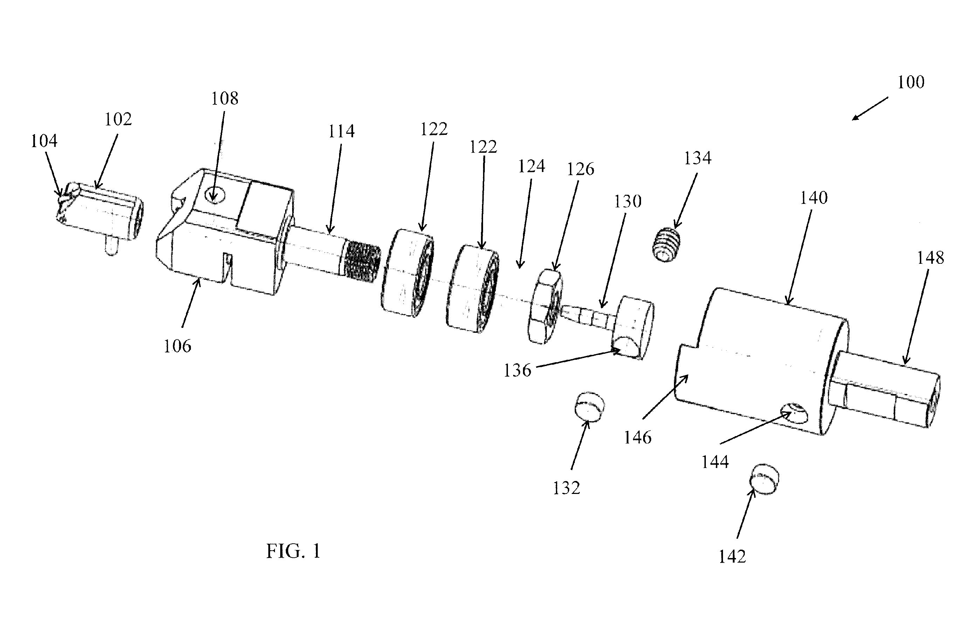

Referring now to FIG. 1, an exploded view of a cutter 100 is shown. The cutter 100 may include a number of components or devices that may be used to bias, position, or orient the cutter 100, or a post associated therewith, relative to a piece of glass to be scored. These components and devices are described in greater detail below.

The cutter 100 includes a cartridge 102. Mounted at the end of the cartridge 102 is a wheel 104 that may rotate about an axis associated with the cartridge 102. The wheel 104 may be configured to score or cut the material. The present disclosure is not limited, however, to an apparatus that utilizes a rotatable wheel; e.g., the cartridge 102 may be used to mount a stationary blade or other cutting or scoring device. The wheel 104 may correspond to the portion of the cutter 100 that is intended to contact the material (e.g., glass) that is to be scored. By mounting the wheel 104 to the cartridge 102, the wheel 104 may effectively be replaced by simply swapping out the cartridge 102 with another cartridge/wheel combination. The cartridge 102/wheel 104 may need to be replaced due to mechanical wear-and-tear incurred as a result of use.

The cutter 100 includes a chuck 106 (which may be referred to as a clamp). The chuck 106 may be configured to receive and securely hold the cartridge 102. In some embodiments, the chuck 106 may include a fastening mechanism (e.g., a screw hole 108 that may accommodate a screw) to secure the cartridge 102 within the chuck 106. In some embodiments, such a fastening mechanism might not be used, such that the cartridge 102 can be separated or removed from the chuck 106 by pulling apart the cartridge 102 and the chuck 106 from one another with a force that is greater than a threshold. The amount of force that is needed to separate the cartridge 102 and the chuck 106 may be established based on, e.g., the mechanical dimensions of the cartridge 102 and the chuck 106, the materials associated with the cartridge 102 and the chuck 106 (thereby establishing a coefficient of friction between the cartridge 102 and the chuck 106), etc.

The chuck 106 includes a post 114 that may be configured to couple to a magnet stem housing 130. For example, a lower portion or end of the magnet stem housing 130 may be configured to screw into the post 114, potentially in conjunction with one or more components, such as one or more bearings 122, a washer 124, and a nut 126. In this respect, a portion or end of the post 114 may be threaded to accommodate receipt (e.g., a screwing on) of the nut 126.

The magnet stem housing 130 may be configured to accommodate a magnet 132 (e.g., a disc magnet) and a screw 134. In this respect, the magnet stem housing 130 may include one or more recesses or holes to receive the magnet 132 and screw 134, potentially as part of a machining, manufacturing, or assembly process. In some embodiments, one or more materials, such as an epoxy or glue, may be used to securely retain the magnet 132 and/or the screw 134 in the magnet stem housing 130 as described further below.

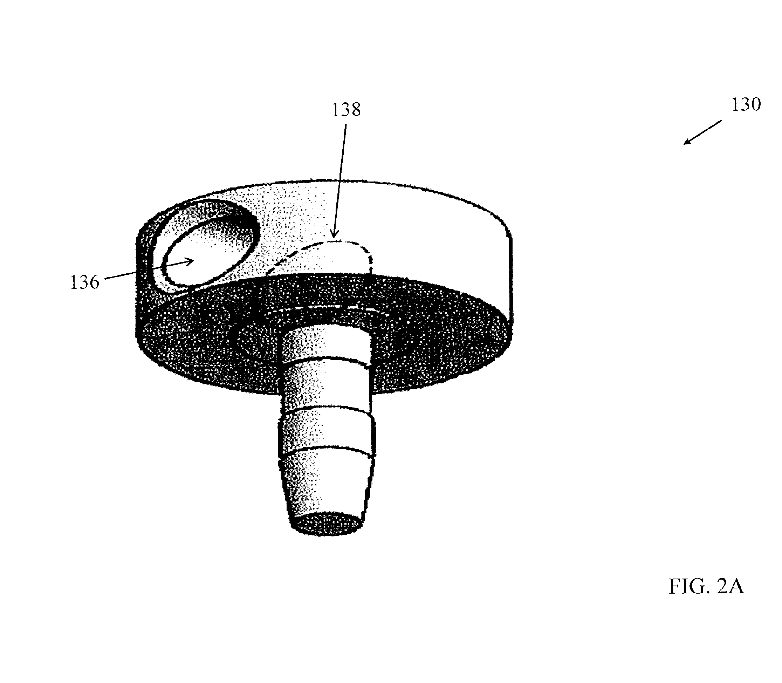

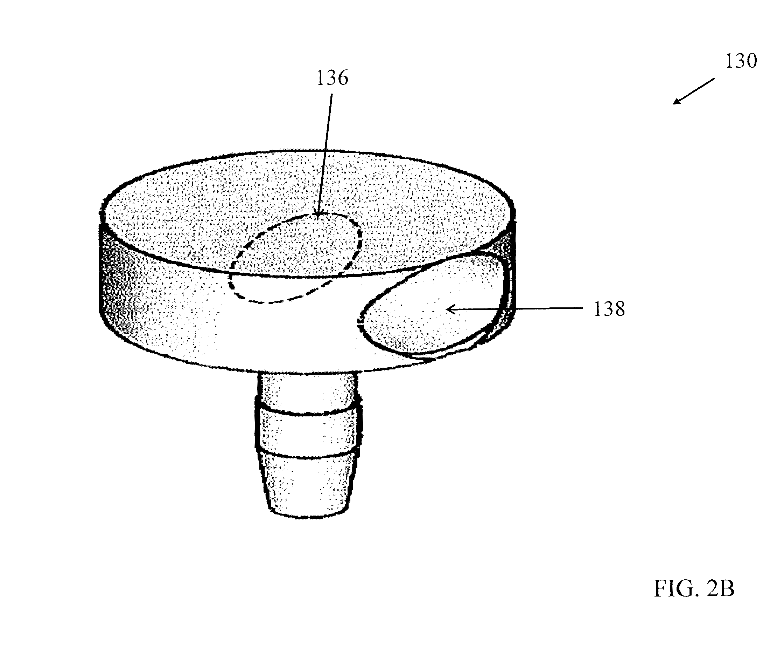

Referring to FIGS. 1 and 2A-2B, a first recess or hole 136 in the magnet stem housing 130 may accommodate the magnet 132 and a second recess or hole 138 that is substantially diametrically opposite to the first recess/hole may accommodate the screw 134. In FIGS. 2A-2B, the dashed lines are intended to signify the recesses or holes that exist on the opposite or back-side of the magnet stem housing 130 relative to the front-side portion of the magnet stem housing 130 that is visible based on the perspective of the figures.

Referring to FIG. 1, the screw 134 may be used to control the relative position or location of the magnet 132 within the (recess/hole 136 of the) magnet stem housing 130. By moving the location of the magnet 132, the attractive forces of the magnets 132, 142 (magnet 142 described below) to one another can be adjusted. For example, the length of the screw 134 relative to the diameter of the upper portion of the magnet stem housing 130 may be used to control the position of the magnet 132 within the magnet stem housing 130. In some embodiments, the magnet stem housing 130 might not include the screw 134 and the position of the magnet 132 may be dictated by a depth of the magnet hole 136.

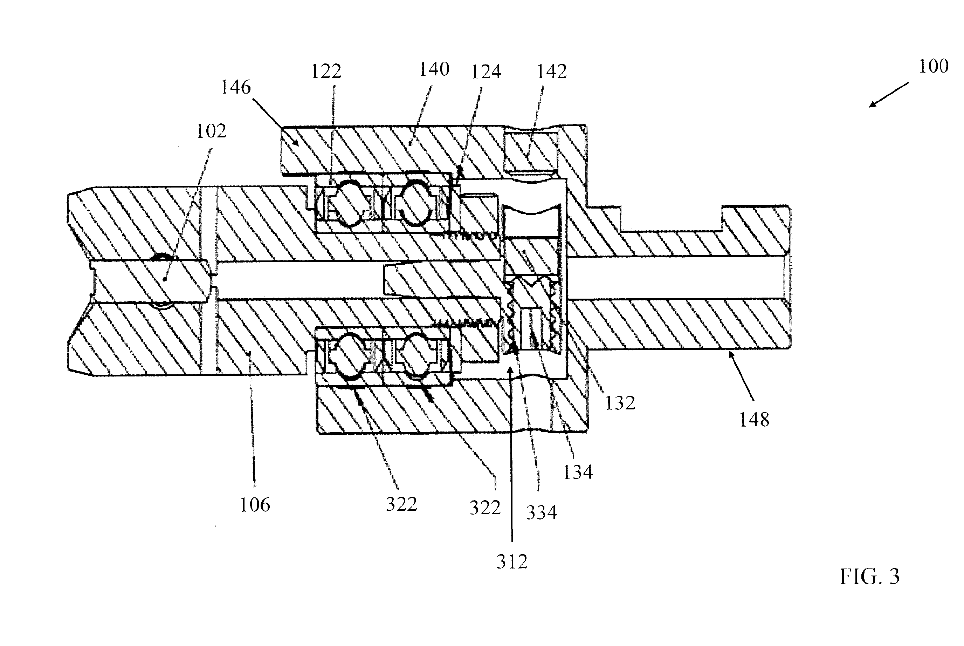

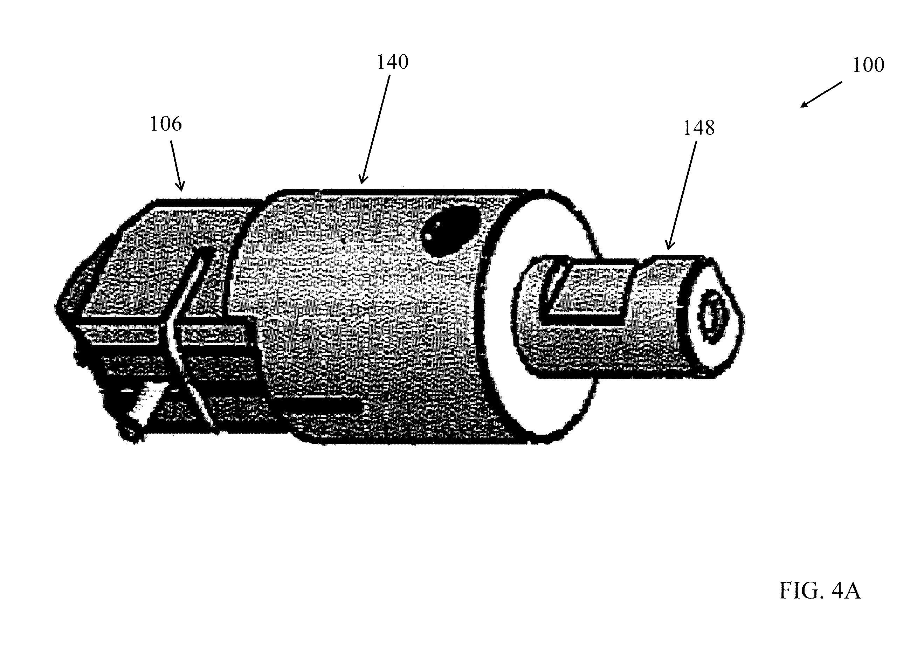

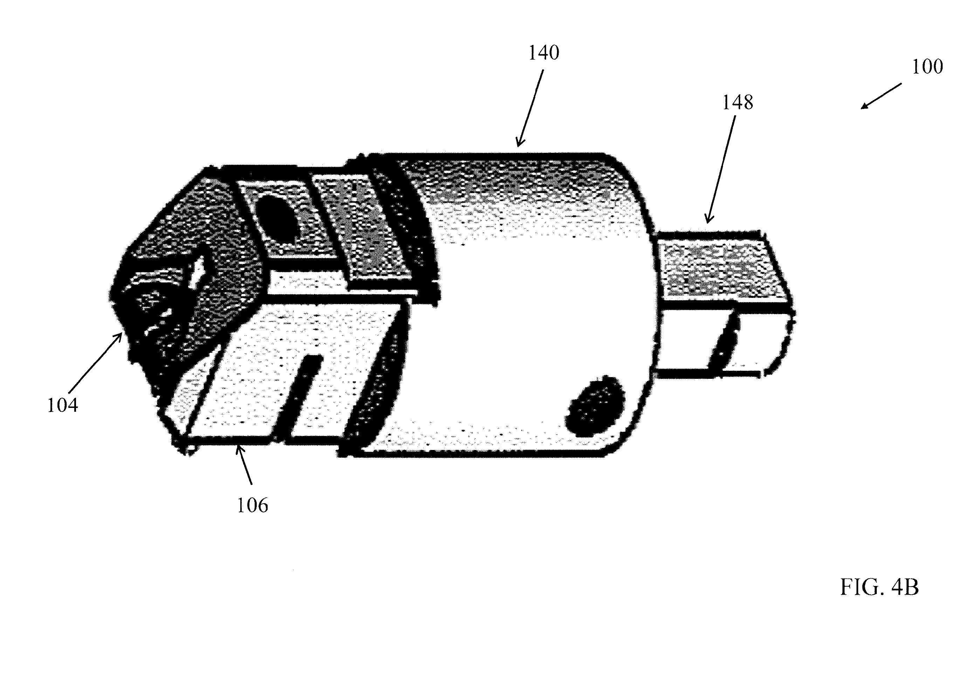

The cutter 100 includes an exterior or outer housing 140. The outer housing 140 may be configured to accommodate or receive one or more of the components and devices of the cutter 100; e.g., the housing 140 may include a bore 312 as can be seen in FIG. 3. For example, the outer housing 140 may retain at least a portion of the chuck 106 and the post 114, the bearings 122, the washer 124, the nut 126, the magnet stem housing 130, the magnet 132, and the screw 134, as may be readily seen with reference to FIGS. 3 and 4A-4B.

Referring back to FIG. 1, much like the magnet stem housing 130, the outer housing 140 may include one or more recesses or holes 144 for accommodating or receiving a magnet 142 (e.g., a disc magnet). In some embodiments, one or more materials, such as an epoxy or glue, may be used to securely retain the magnet 142 in the outer housing 140.

When the cutter 100 is assembled as shown in FIGS. 3 and 4A-4B, the magnetic forces or coupling between the magnet 132 and the magnet 142 may be used to control the position or orientation of the cutter 100. For example, the attraction of the magnets 132 and 142 provides sufficient force to bias the chuck assembly 106 and the outer housing 140 to a "normal" position where the magnets 132 and 142 are aligned with one another and the relative position of the wheel 104 is known. Consequently, when the cutter 100 is positioned into engagement with the workpiece or material (e.g. glass) to be scored, the position of the wheel 104 is known and repeatable, such as when the wheel 104 contacts, or is about to contact, the material to be scored. In this respect, an (initial) orientation of the cutter 100 (e.g., post 114/wheel 104) can be ensured without having to utilize biasing components (e.g., springs) that are mechanical in nature in terms of their operation.

As seen with reference to FIGS. 1, 3, and 4A-4B, the outer housing 140 may include a lip or flange 146. The flange 146 may be used to limit the degree of movement or rotation of the chuck 106 when the cutter 100 is assembled.

Referring primarily to FIG. 1, the outer housing 140 may include a shank 148 configured so that the cutter 100 may be mounted to a machine (not shown) to provide for automated scoring of a material. Of course, the shank 148 does not need to be driven using an automated mechanism or machine, as the shank 148 or cutter 100 may accommodate manual scoring.

Referring to FIG. 3, the bearings 122 may couple to the outer housing 140 via an adhesive or a retaining or bonding compound 322. Similarly, an adhesive or compound 334 may be used to secure the screw 134 in the magnet stem housing 130. Aspects of the present disclosure are not limited to securing the bearings 122 within the outer housing 140. The bearings 122 (e.g., the outer race of the bearings) may be fixed within the bore 312 of the outer housing by means other than an adhesive; e.g., mechanical means such as a set screw, or the asymmetrical geometry, etc.

One skilled in the art will appreciate that the various components and devices of the cutter 100 described above may be selected based on an application or environment where the cutter 100 is utilized. For example, a type of component or device, a size or tolerance associated with the component or device, a material associated with the component or device, etc., may be a function of the application or environment in which the cutter 100 is used.

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure.

## Claims

1. An apparatus for providing a self-aligning cutter configured to score or cut a material, comprising:
a chuck;
a first magnet coupled with the chuck; and
an outer housing including a second magnet, which outer housing is configured to couple with the chuck in a manner that at least a portion of the chuck and the outer housing are rotatable relative to one another;
wherein the first magnet and the second magnet are positioned relative to one another such that magnetic force there between biases the outer housing and the portion of the chuck to rest in a normal position.

2. The apparatus of claim 1, further comprising a magnet stem housing configured to couple to the chuck via a post associated with the chuck.

3. The apparatus of claim 2, wherein the magnet stem housing is configured to accommodate the first magnet.

4. The apparatus of claim 2 or 3, wherein the magnet stem housing is configured to permit adjustable positioning of the first magnet.

5. The apparatus of one of claims 2 to 4, wherein the magnet stem housing is configured to couple to a screw to control the magnetic force.

6. The apparatus of one of claims 1 to 5, further comprising at least one bearing to facilitate rotation between the chuck and the outer housing.

7. The apparatus of one of claims 1 to 6, wherein the chuck is configured to receive a cartridge.

8. The apparatus of claim 7, wherein the cartridge is coupled to a wheel configured to contact the material.

9. The apparatus of claim 8, wherein the wheel is configured to score the material.

10. The apparatus of one of claims 7 to 9, wherein the cartridge is coupled to a wheel configured to cut the material.

11. The apparatus of one of claims 7 to 10, wherein the cartridge is coupled to a blade configured to contact the material.

12. The apparatus of one of claims 7 to 11, wherein the chuck comprises a fastening mechanism configured to secure the cartridge within the chuck.

13. The apparatus of one of claims 1 to 12, wherein the apparatus is configured to permit adjustment of the magnetic force.

14. The apparatus of one of claims 1 to 13, wherein the outer housing comprises a shank configured to couple to a machine that is used to drive the cutter.

15. The apparatus of one of claims 1 to 14, wherein the outer housing includes a feature that limits the relative rotation between the chuck and the outer housing.
